# EUROPEAN PATENT APPLICATION

(11) **EP 4 477 568 A1**
(43) Date of publication of application: **18.12.2024**
(21) Application number: 23749678.1
(22) Date of filing: 27.01.2023
(51) Int. Cl.: B65B 41/12, B65B 41/14, B65B 41/16, B65B 41/18, B65H 23/035, B65H 23/038, B65H 23/182, B65B 9/06, B65B 9/067, B65B 9/08, B65B 9/207, B65B 51/10, B65B 51/16

(54) **BELT-LIKE PLASTIC FILM CONVEYANCE METHOD, BELT-LIKE PLASTIC FILM CONVEYANCE GUIDE, AND BAG-MAKING DEVICE**

(30) Priority: 07.02.2022 JP 2022017391; 07.02.2022 JP 2022017182; 08.04.2022 JP 2022064400; 08.07.2022 JP 2022110436; 08.07.2022 JP 2022110423; 18.10.2022 JP 2022166596
(71) Applicant: Yushin Co., Ltd., Sanjo-shi, Niigata 955-0002 (JP)
(72) Inventor: FUTASE, Katsunori, Sanjo-shi Niigata 955-0002 (JP)
(74) Representative: Grünecker Patent- und Rechtsanwälte PartG mbB
(86) International application number: PCT/JP2023/002560
(87) International publication number: WO 2023/149362

(57) **Abstract**

To provide a method for conveying a strip plastic film that can appropriately change the conveyance path for a strip plastic film, which is continuously conveyed from an upstream side such as a raw film to a downstream side, and thus allow the strip plastic film to be accurately folded at a desired position in its width direction; a conveyance guide for the strip plastic film; and a bag-making device. The method includes, when the strip plastic film conveyed from the upstream side is conveyed to the downstream side while being wound on the outer surface of a guide member in at least the central region in the width direction of the film, moving, rotating, or tilting the guide member that has the strip plastic film wound thereon via a base connected to the guide member to change the frictional resistance of the strip plastic film with respect to the guide member and the tension of the strip plastic film, thereby allowing the strip plastic film to slide along the outer surface of the guide member, and thus changing the conveyance path for the strip plastic film.

## Description

### Technical Field

The present invention relates to a method for conveying a strip plastic film that is suitable for folding a strip plastic film, which is placed on the upstream side of a heat-sealing means of a bag-making device for producing packing bags, such as a vertical or horizontal filling and packing machine or a vertical or horizontal bag-making machine, for example, and which is continuously conveyed from a raw film or the like, in the width direction of the film while appropriately changing the conveyance path for the film; a conveyance guide (i.e., a bag-making guide) for the strip plastic film, and a bag-making device including the conveyance guide.

### Background Art

Conventionally, a filling and packing machine is known that can continuously produce a plurality of packing bags by forming a strip plastic film into bag shapes while automatically filling the bags with contents, such as liquid substances, viscous substances, and powdery or granular substances of food, beverages, liquid seasonings, pharmaceuticals, or chemicals, for example (for example, Patent Document 1).

In such a filling and packing machine, a strip plastic film is drawn out of a raw film, which has been obtained by winding the plastic film in a rolled form, and is guided to a conveyance guide, which is a film folding mechanism, via a film guide mechanism. Then, the plastic film is folded in two along its longitudinal direction by the conveyance guide. Next, the plastic film is sent out with its overlapping end edges pinched, and is also heat-sealed by a vertical sealing mechanism (i.e., a pair of vertical seal rolls), whereby the plastic film is vertically sealed in a tubular form. Next, the tubular plastic film is heat-sealed in the horizontal direction by a horizontal sealing mechanism (i.e., a pair of horizontal seal rolls), whereby the plastic film is horizontally sealed such that it has a horizontal sealed portion to become the bottom of a packing bag to be formed. Further, the tubular, closed-bottomed plastic film is filled with a packing object, such as a liquid or viscous substance, by a filling nozzle, and also, the open side of the packing bag is horizontally sealed by the horizontal sealing mechanism, which allows for the formation of continuous packing bags.

### Citation List

### Patent Document

Patent Document 1: Japanese Patent Laid-Open No. 6-8906

### Summary of Invention

### Technical Problem

In such a filling and packing machine, when a strip plastic film is folded in two along its longitudinal direction by the conveyance guide, there is a possibility that if the position of folding is displaced from the central position in the width direction of the strip plastic film, end edges on the opposite sides of the film may not be aligned properly during folding of the film. Thus, so-called misaligned end edges may occur. Note that from the perspective of preventing misaligned end edges, folding of a strip plastic film should be performed based on the premise that the central position in the width direction of the strip plastic film is allowed to coincide with the machine center related to the filling and packing machine (i.e., the bite center of the pair of vertical seal rolls in the foregoing filling and packing machine).

Conventionally, various measures have been taken to allow the center in the width direction of a strip plastic film, which has been just unwound from a raw film roll, to coincide with the machine center related to a filling and packing machine. For example, the position of the raw film is appropriately adjusted, or the position of a conveyance guide is adjusted in accordance with the central position in the width direction of a strip plastic film used by an operator during an operational test. However, such methods are quite laborious, and also, since there is a certain distance between the unwound position and the folded position of the strip plastic film, there is a possibility that the strip plastic film may meander while being conveyed due to setting errors of conveyance rolls or a guide located between the two positions, for example. Moreover, when the position of the raw film is adjusted, the central position in the width direction of the strip plastic film is calculated from the width of the core tube of the raw film. However, since there is an error between the widths of the core tube and the strip plastic film, it would be impossible to identify the correct position. Therefore, even when the position of the raw film or the position of the conveyance guide is adjusted, the central position in the width direction of the strip plastic film, which has been unwound, may become displaced from the machine center until the strip plastic film reaches a pair of vertical seal rolls, with the result that misaligned end edges may occur.

In view of the foregoing, an object of the present invention is to provide a method for conveying a strip plastic film that can appropriately change the conveyance path for a strip plastic film, which is continuously conveyed from an upstream side such as a raw film to a downstream side, and thus allow the strip plastic film to be accurately folded at a desired position in its width direction; a conveyance guide for the strip plastic film; and a bag-making device including the conveyance guide.

### Solution to Problem

To achieve the foregoing object, the present invention proposes a method for conveying a strip plastic film, including, when a strip plastic film conveyed from an upstream side is wound on an outer surface of a guide member in at least a central region in a width direction of the film, and the strip plastic film is conveyed to a downstream side with the wound state maintained: moving, rotating, or tilting the guide member that has the strip plastic film wound thereon via a base connected to the guide member to change frictional resistance of the strip plastic film with respect to the guide member and tension of the strip plastic film, thereby allowing the strip plastic film to slide along the outer surface of the guide member, and thus changing a conveyance path for the strip plastic film.

In the method for conveying the strip plastic film of the present invention, it is preferable that the movement of the guide member be a movement of the guide member in a direction along an axial core of the guide member within a horizontal plane including the axial core of the guide member, the rotation of the guide member be a rotation of the guide member about a fulcrum set in advance within the horizontal plane including the axial core of the guide member, and the tilting of the guide member be a tilting of the guide member in a direction orthogonal to the width direction of the strip plastic film.

The present invention also provides a conveyance guide for a strip plastic film, the conveyance guide being adapted to guide a strip plastic film conveyed from an upstream side to a downstream side while allowing the strip plastic film to be wound on an outer surface of the conveyance guide, the conveyance guide including: a guide member adapted to have wound thereon the strip plastic film in at least a central region in a width direction of the film; a base connected to the guide member; and moving means for moving, rotating, or tilting the guide member via the base with the strip plastic film wound on the guide member, thereby allowing the strip plastic film to slide along an outer surface of the guide member, and thus changing a conveyance path for the strip plastic film.

In the conveyance guide for the strip plastic film of the present invention, the following are preferable.
(1) The movement of the guide member is a movement of the guide member in a direction along an axial core of the guide member within a horizontal plane including the axial core of the guide member, the rotation of the guide member is a rotation of the guide member about a fulcrum set in advance within the horizontal plane including the axial core of the guide member, and the tilting of the guide member is a tilting of the guide member in a direction orthogonal to the width direction of the strip plastic film.
(2) The moving means includes a drive source adapted to move or rotate the guide member via the base, detection means for detecting a central position and/or opposite end edge positions in the width direction of the strip plastic film on an upstream side and/or a downstream side of the guide member, and a control unit configured to operate the drive source in accordance with a detection result of the detection means.
(3) The moving means includes a drive source adapted to tilt the guide member via the base, detection means for detecting a central position and/or opposite end edge positions in the width direction of the strip plastic film on an upstream side and/or a downstream side of the guide member, and a control unit configured to operate the drive source in accordance with a detection result of the detection means.
(4) The base includes a shaft body connected to a rear end portion of the base, the shaft body being adapted to be rotated by the drive source so as to tilt the guide member via the base.
(5) The guide member includes a pair of rods arranged on at least one of an upstream side, a downstream side, and a lateral side at a position nearest the guide member, the pair of rods being adapted to hold a region of the strip plastic film, excluding a region of the strip plastic film wound on the guide member, while being in sliding contact with the held region such that opposite sides of the sliding contact region face each other.
(6) The guide member is a guide roll that is rotatably held via a bearing, and includes a rotary axial core lying along the width direction of the plastic film.
(7) The guide roll includes a roll body having a constant roll diameter across a width direction of the guide roll.
(8) The guide roll includes a maximum-diameter portion at a central portion in a width direction of the guide roll, and reduced-diameter portions connected to opposite sides of the maximum-diameter portion, the maximum-diameter portion having a maximum roll diameter, and the reduced-diameter portions each having a roll diameter that gradually decreases in a direction from the maximum-diameter portion toward end portions in the width direction of the guide roll.
(9) The maximum-diameter portion includes boundary corner portions and a strip body located between the boundary corner portions, the boundary corner portions forming boundaries with the respective reduced-diameter portions, and the strip body forming a winding surface parallel with the axial core of the guide roll, and each reduced-diameter portion includes a minimum-diameter portion with a minimum roll diameter, the minimum-diameter portion including an end edge corner portion for forming a stretching end for the strip plastic film.
(10) Each reduced-diameter portion includes a recess portion between each boundary corner portion and each end edge corner portion, the recess portion forming a non-contact region adapted to be not contacted by the strip plastic film.
(11) The guide roll includes sub-guides at opposite end portions in a width direction of a roll body of the guide roll, the sub-guides being adapted to allow the strip plastic film to slide on the sub-guides while being in contact with the strip plastic film, or adapted to rotate while being in contact with the strip plastic film.
(12) The sub-guide includes moving means that is movable in a direction in which the strip plastic film is pressed, or a direction away from the strip plastic film.

The present invention also proposes a bag-making device including an unwind roll adapted to sequentially unwind a strip plastic film from a raw film wound in a rolled form; the foregoing conveyance guide adapted to guide the strip plastic film unwound by the unwind roll from an upstream side to a downstream side while having the strip plastic film wound on an outer surface of the conveyance guide; and heat-sealing means for pinching, pressing, and heating the strip plastic film that has been folded in at least two on an exit side of the conveyance guide, thereby forming one or more sealed portions in the strip plastic film in a longitudinal direction and/or a width direction of the strip plastic film, and thus forming the strip plastic film into a bag shape.

In the bag-making device of the present invention, the following are preferable.
(1) The unwind roll includes a roll body adapted to hold the raw film and rotatably supported via a bearing, moving means connected to an axial end of the roll body, the moving means being adapted to move the roll body together with the raw film along an axial core of the roll body, detection means for detecting a central position in the width direction of the strip plastic film that has been just unwound, and a control unit configured to allow the moving means to move the roll body together with the raw film along the axial core of the roll body in accordance with information detected by the detection means, thereby changing the central position in the width direction of the strip plastic film related to the unwinding.
(2) The roll body includes braking means or driving means for adjusting a rotational speed of the roll body.
(3) The raw film includes an annular body adapted to have the strip plastic film wound on an outer surface of the annular body in a rolled form, the annular body including an inner through-hole portion that has fitted therein a body portion of the roll body so as to be rotatable in synchronization with rotation of the roll body.

### Advantageous Effects of Invention

According to the present invention, the guide member is moved, rotated, or tilted with the strip plastic film wound thereon, so that the strip plastic film is allowed to slide along the outer surface of the guide member. This can appropriately change (i.e., adjust) the conveyance path for the strip plastic film that is conveyed continuously. Therefore, it is possible to allow the central position or the opposite end edge positions in the width direction of the strip plastic film to precisely coincide with a desired position(s), and thus prevent the central position in the width direction of the strip plastic film from being displaced from the machine center related to a filling and packing machine while being conveyed unlike in conventional devices. This allows the strip plastic film to be always folded accurately, which can effectively suppress the generation of misaligned end edges and the like.

In addition, according to the present invention, the central position and/or the opposite end edge positions in the width direction of the strip plastic film is/are detected with a detection means, such as a CCD camera or a sensor, and the conveyance guide is moved, rotated, or tilted with a moving means based on information obtained by the detection means. Thus, the conveyance path for the strip plastic film can be adjusted while packing bags are being made. Thus, it is possible to automatically adjust the position of the strip plastic film without the need for an operator, and thus reduce the production cost related to packing bags.

Further, according to the present invention, the central position in the width direction of the strip plastic film, which has been just unwound from the raw film, is detected with a detection means, such as a CCD camera or a sensor, and the raw film is moved with a moving means based on information obtained by the detection means so as to allow the central position in the width direction of the strip plastic film to pass through a predetermined position (i.e., a setting value). This allows for automatic adjustment of the positional deviation (i.e., meandering) of the plastic film that has been fed out of the raw film.

Therefore, according to the present invention, it is possible to adjust the position of a plastic film fed out of a raw film without stopping a filling and packing machine when the raw film is replaced, for example. This can improve productivity and save manpower, and thus reduce the production cost.

### Brief Description of Drawings

[Figure 1] Figure 1(a) is a perspective view illustrating an embodiment of a conveyance guide of the present invention, and Figure 1(b) is a view illustrating a state in which a strip plastic film is wound on the conveyance guide in Figure 1(a).
[Figure 2] Figure 2(a) is a plan view of the conveyance guide in Figure 1, Figure 2(b) is a front view thereof, and Figure 2(c) is a left side view thereof (which does not illustrate rods).
[Figure 3] Figure 3 is a view illustrating a state in which the conveyance guide in Figure 1 is moved in a direction along the axial core of a guide roll within the horizontal plane including the axial core.
[Figure 4] Figure 4 is a view illustrating a state in which the conveyance guide in Figure 1 is rotated within the horizontal plane including the axial core of the guide roll.
[Figure 5] Figure 5 is a plan view illustrating another embodiment of the conveyance guide of the present invention.
[Figure 6] Figure 6 is a view illustrating a state in which the conveyance guide in Figure 5 is tilted clockwise with respect to a direction orthogonal to the width direction of a strip plastic film F.
[Figure 7] Figure 7 is a view illustrating a state in which the conveyance guide in Figure 5 is tilted anticlockwise with respect to the direction orthogonal to the width direction of the strip plastic film F.
[Figure 8] Figure 8 is a view illustrating further another embodiment of the conveyance guide of the present invention in which Figure 8(a) is a front view and Figure 8(b) is a side view.
[Figure 9] Figure 9(a) is a view illustrating a state in which the conveyance guide in Figure 8 is tilted anticlockwise with respect to a direction orthogonal to the width direction of the strip plastic film F, and
Figure 9(b) is a view illustrating a state in which the conveyance guide in Figure 8 is tilted clockwise.
[Figure 10] Figure 10 is a view illustrating still another embodiment of the conveyance guide of the present invention in which Figure 10(a) is a plan view, Figure 10(b) is a front view, Figure 10(c) is a left side view (which does not illustrate rods), and Figure 10(d) is a cross-sectional view along a position A-A in Figure 10(b) .
[Figure 11] Figure 11 is a view illustrating yet another embodiment of the conveyance guide of the present invention in which Figure 11(a) is a plan view, Figure 11(b) is a front view, Figure 11(c) is a left side view (which does not illustrate rods), and Figure 11(d) is a cross-sectional view along a position B-B in Figure 11(b) .
[Figure 12] Figure 12 is perspective view illustrating yet another embodiment of the conveyance guide of the present invention.
[Figure 13] Figure 13(a) is a plan view of the conveyance guide in Figure 12, Figure 13(b) is a view illustrating a cross-section of a guide member, Figure 13(c) is a left side view (which does not illustrate rods), and Figure 13(d) is a front view (which does not illustrate rods).
[Figure 14] Figure 14 is a view illustrating yet another embodiment of the conveyance guide of the present invention in which Figure 14(a) is a perspective view and Figure 14 (b) is a plan view.
[Figure 15] Figure 15 is a plan view illustrating yet another embodiment of the conveyance guide of the present invention.
[Figure 16] Figure 16 is a view illustrating a vertical filling and packing machine as an embodiment of a bag-making device of the present invention.
[Figure 17] Figure 17 is a right side view of the vertical filling and packing machine in Figure 16.
[Figure 18] Figure 18 is a cross-sectional view illustrating the structure of an unwind roll.
[Figure 19] Figure 19(a) is a view illustrating the configuration of the unwind roll, and Figure 19(b) is a view in the direction of an arrow D-D in Figure 19(a).
[Figure 20] Figure 20 is a left side view of the vertical filling and packing machine in Figure 16, which illustrates the machine center of the vertical filling and packing machine.
[Figure 21] Figure 21 is a view illustrating the bite center (i.e., the machine center) of a pair of vertical seal rolls provided in the vertical filling and packing machine in Figure 16.

### Description of Embodiments

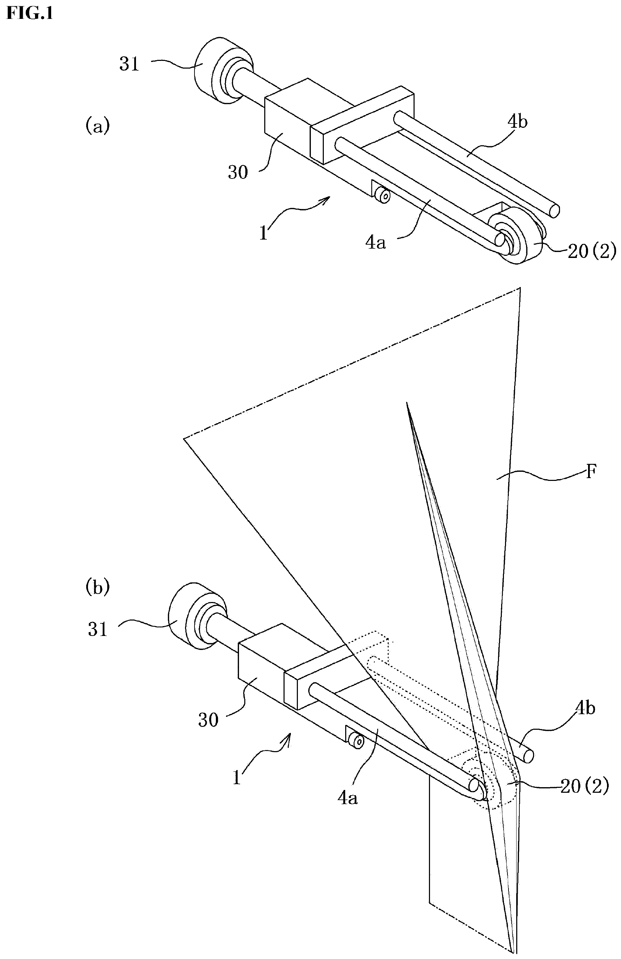

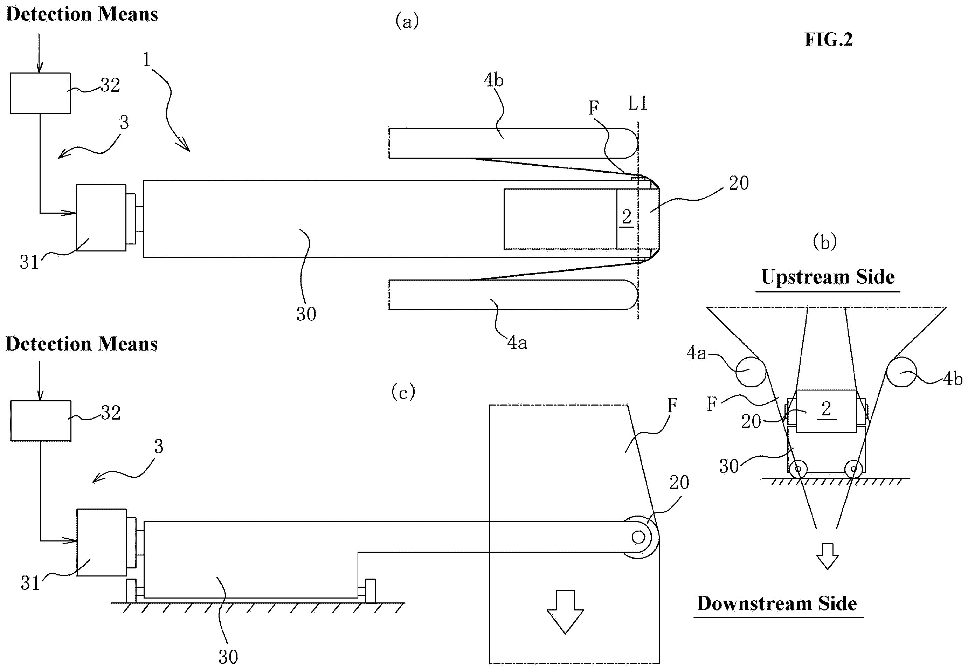

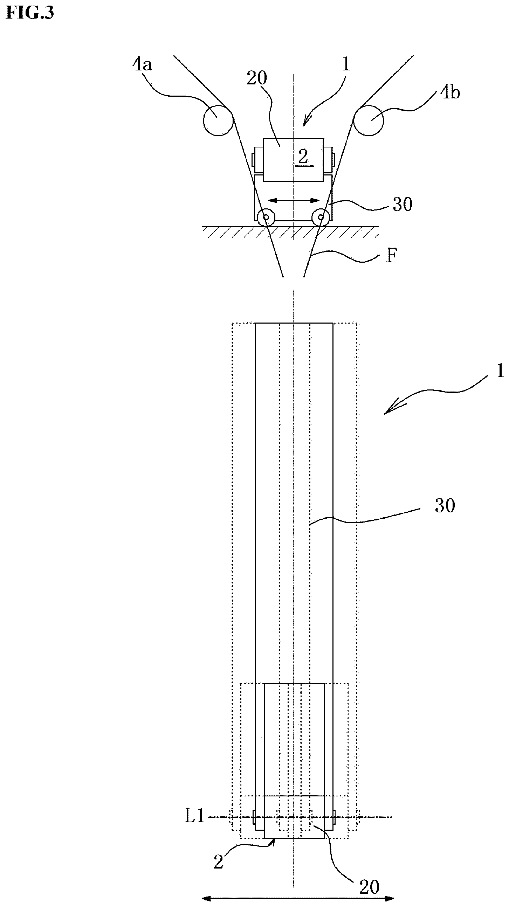

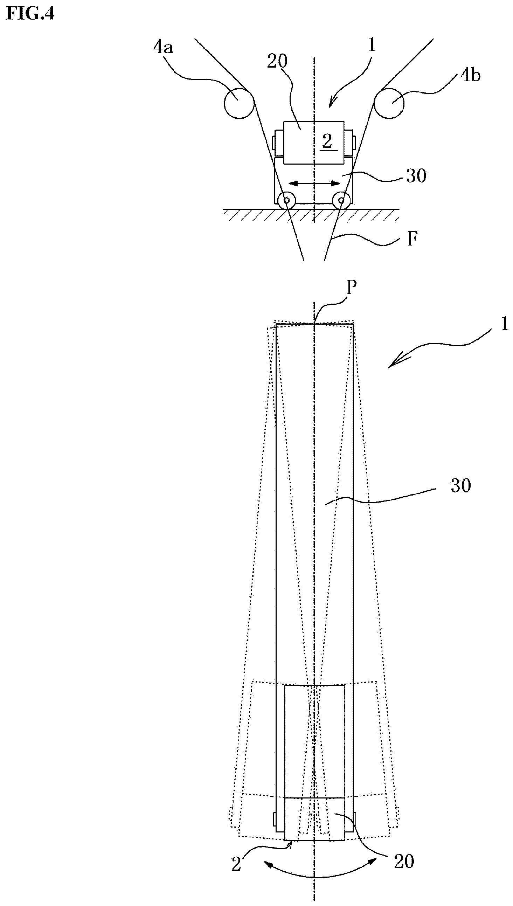

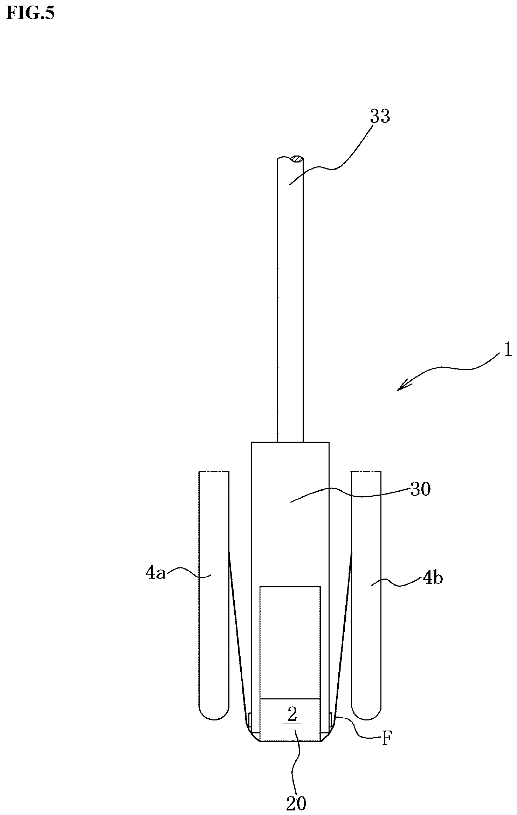

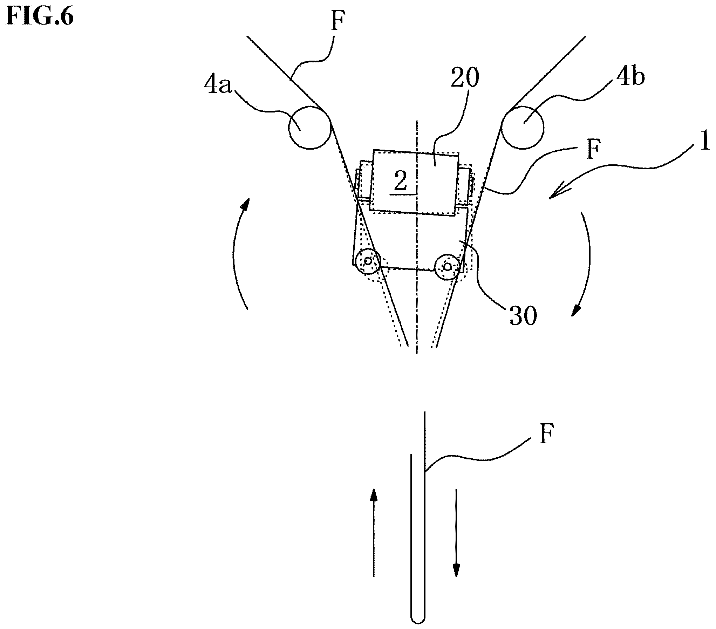

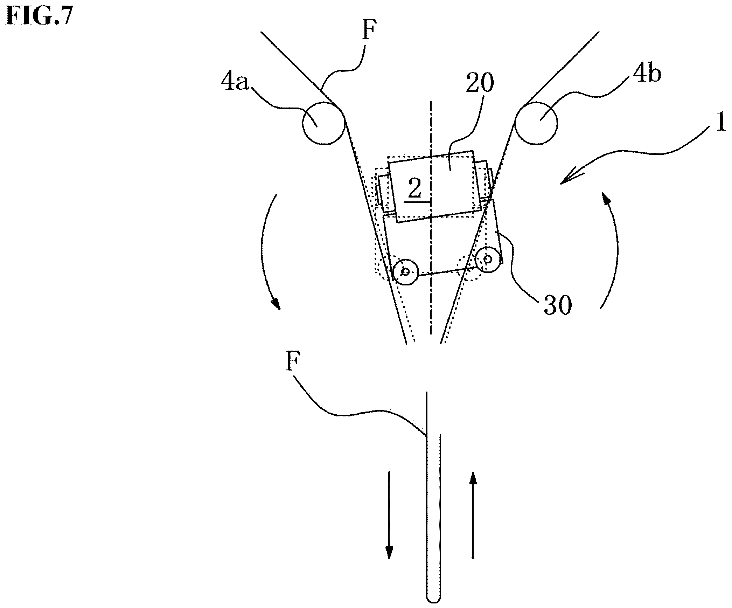

Figure 1(a) is a perspective view illustrating an embodiment of a conveyance guide 1 of the present invention, and Figure 1(b) is a view illustrating a state in which a strip plastic film F is wound on the conveyance guide 1 in Figure 1(a). Figure 2(a) is a plan view of the conveyance guide 1 in Figure 1, Figure 2(b) is a front view thereof, and Figure 2(c) is a left side view thereof (which does not illustrate rods). Figure 3 is a view illustrating a state in which the conveyance guide 1 in Figure 2 is moved in a direction along an axial core L1 of a guide roll 20, which forms a guide member 2, within the horizontal plane including the axial core L1. Figure 4 is a view illustrating a state in which the conveyance guide 1 in Figure 1 is rotated within the horizontal plane including the axial core L1 of the guide roll 20. Figure 5 is a plan view illustrating another embodiment of the conveyance guide of the present invention. Figure 6 is a view illustrating a state in which the conveyance guide in Figure 5 is tilted clockwise with respect to a direction orthogonal to the width direction of the strip plastic film F. Figure 7 is a view illustrating a state in which the conveyance guide in Figure 5 is tilted anticlockwise with respect to the direction orthogonal to the width direction of the strip plastic film F.

The conveyance guide 1 is adapted to have the strip plastic film F wound thereon, and allow the strip plastic film F to be folded in two in its width direction at a position immediately below the guide roll 20, which forms the guide member 2, while conveying the strip plastic film F to the downstream side with the rotation of the guide roll 20. Note that the conveyance guide 1 includes the guide roll 20 as the guide member 2, a base 30 connected to the guide roll 20, and a moving means 3 for moving the guide roll 20 with the strip plastic film F wound thereon to adjust the installation position of the guide roll 20.

Although the present embodiment exemplarily illustrates a case where the guide member 2 includes the rotatable guide roll 20, the guide member 2 is not limited to a rotatable roll. For example, as the guide member 2, it is possible to use a member adapted to slide on the inner surface of the strip plastic film F while being in contact therewith, or adapted to be in sliding contact therewith.

As illustrated in Figures 1 to 6, the upstream side of the conveyance guide 1 is provided with a pair of rods 4a and 4b that are adapted to be in contact with the outer surface of the strip plastic film F, and hold a region of the strip plastic film F, excluding its region wound on the guide roll 20, while being in sliding contact with the held region such that opposite sides of the sliding contact region face each other, thereby guiding the folding of the strip plastic film F.

Although Figures 1 to 6 illustrate a case where the pair of rods 4a and 4b are provided at positions upstream of the conveyance guide 1, the pair of rods 4a and 4b may be provided on opposite lateral sides in the width direction of the conveyance guide 1 with gaps provided therebetween, or may be provided at positions downstream of the conveyance guide 1.

The moving means 3 includes a drive source 31, which includes an actuator, such as a hydraulic cylinder or an air pressure cylinder, adapted to move, rotate, or tilt the guide roll 20 via the base 30 connected to the guide roll 20; a detection means (not illustrated) for detecting the central position and the opposite end edge positions in the width direction of the strip plastic film F on the upstream side and/or the downstream side of the guide roll 20; and a control unit 32 configured to operate the drive source 31 in accordance with the detection result of the detection means to move, rotate, or tilt the guide roll 20 via the base 30, and thus adjust the installation position of the guide roll 20, thereby changing the conveyance path for the strip plastic film F.

The moving means 3 may move, rotate, or tilt not only the base 30 (with the guide roll 20) but also the pair of rods 4a and 4b integrally with the base 30 (with the guide roll 20) if the moving means 3 is connected to the pair of rods 4a and 4b.

The detection means may be any means that can detect the central position and/or the side edge positions in the width direction of the strip plastic film F at a position upstream and/or downstream of the guide roll 20. For example, it is possible to use a CCD camera or various types of edge sensors (e.g., a detection means for detecting the width of the strip plastic film F using an image sensor, or a detection means for irradiating the strip plastic film F with ultrasound or a laser beam, for example, to detect its edges based on a beam transmitted through or reflected by a detector).

Information (i.e., the central position and/or the opposite end edge positions in the width direction of the strip plastic film F) detected by the detection means is transmitted to the control unit 32 so that a deviation from a setting value input to the control unit 32 in advance is calculated. When the control unit 32 has determined that the calculated deviation from the setting value is outside a prescribed range, the control unit 32 determines the installation position of the guide roll 20 based the deviation. Then, the base 30 is moved, rotated, or tilted to a predetermined position by the drive source 31 in response to an instruction from the control unit 32 so that the guide roll 20 is moved to a desired position.

It is possible to adjust the installation position of the guide roll 20 by moving the guide roll 20 within the horizontal plane including the axial core L1 of the guide roll 20 as illustrated in Figure 3, or by rotating the guide roll 20 about a fulcrum P (i.e., the center in the width direction of the rear end of the base 30) within the horizontal plane including the axial core L1 as illustrated in Figure 4. Note that the guide roll 20 may be moved or rotated in a region other than the region within the horizontal plane including the axial core L1.

The conveyance guide 1 illustrated in Figure 5 includes a shaft body 33 at the rear end portion of the base 30. As the shaft body 33 is appropriately rotated as illustrated in Figures 6 and 7, the guide roll 20 as the guide member 2 is tilted with respect to a direction orthogonal to the width direction of the strip plastic film F so that the installation position of the guide roll 20 is adjusted. Herein, the direction orthogonal to the width direction of the strip plastic film F refers to a direction along the periphery of the axial core of the shaft body 33 provided that the shaft body 33 is arranged horizontally and its axial core is orthogonal to the sheet surface. However, the arrangement of the shaft body 33 with respect to the base 30 may be other than the horizontal arrangement, and is not limited to the one illustrated in the drawing.

When the guide roll 20 is tilted clockwise with respect to the sheet surface, the end edges of the strip plastic film F gradually move as illustrated in a plane view at the lower portion of Figure 6. Conversely, when the guide roll 20 is tilted anticlockwise with respect to the sheet surface, the end edges of the strip plastic film F gradually move as illustrated in a plane view at the lower portion of Figure 7. The tilt angle may be adjusted in the range of about ±10° from the horizontal plane as a reference. Although the present embodiment exemplarily illustrates a case where the rotatable guide roll 20 is used as the guide member 2, the guide member 2 may be a member adapted to slide on the inner surface of the strip plastic film F while being in contact therewith, or adapted to be in sliding contact therewith.

When the installation position of the guide roll 20 is adjusted in this manner, frictional resistance between the guide roll 20 and the strip plastic film F changes, and also, the tension of the strip plastic film F changes. Accordingly, the strip plastic film F wound on the guide roll 20 slides along a roll body of the guide roll 20, and the conveyance path for the strip plastic film F is thus changed. This allows the central position or the opposite end edge positions in the width direction of the strip plastic film F to precisely coincide with a predetermined position(s). Thus, when the strip plastic film F is folded in two at its central position in the width direction, for example, end edges on the opposite sides of the film can be accurately aligned one on top of the other. This can effectively suppress the generation of misaligned end edges.

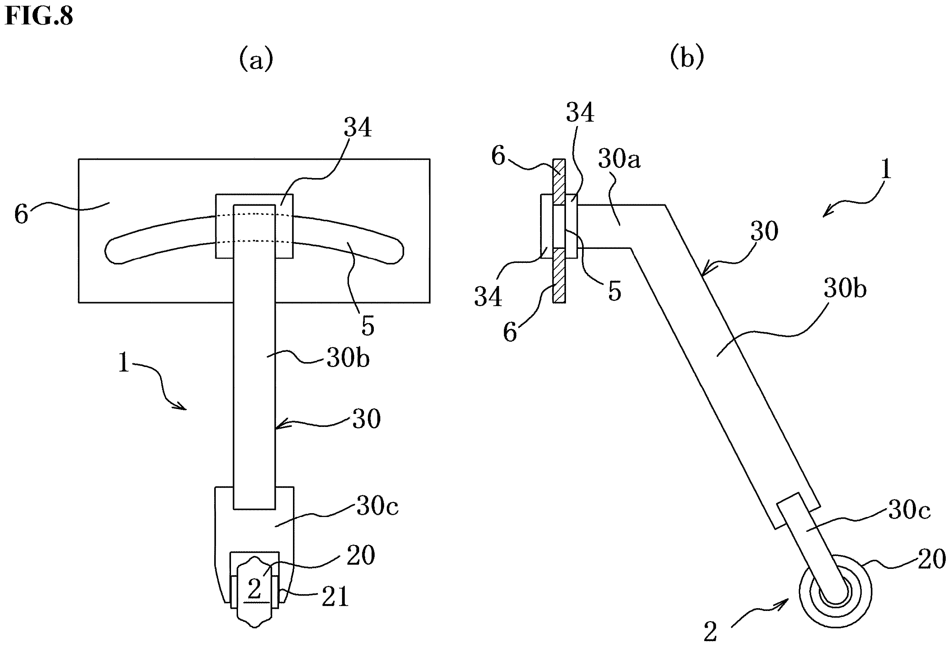

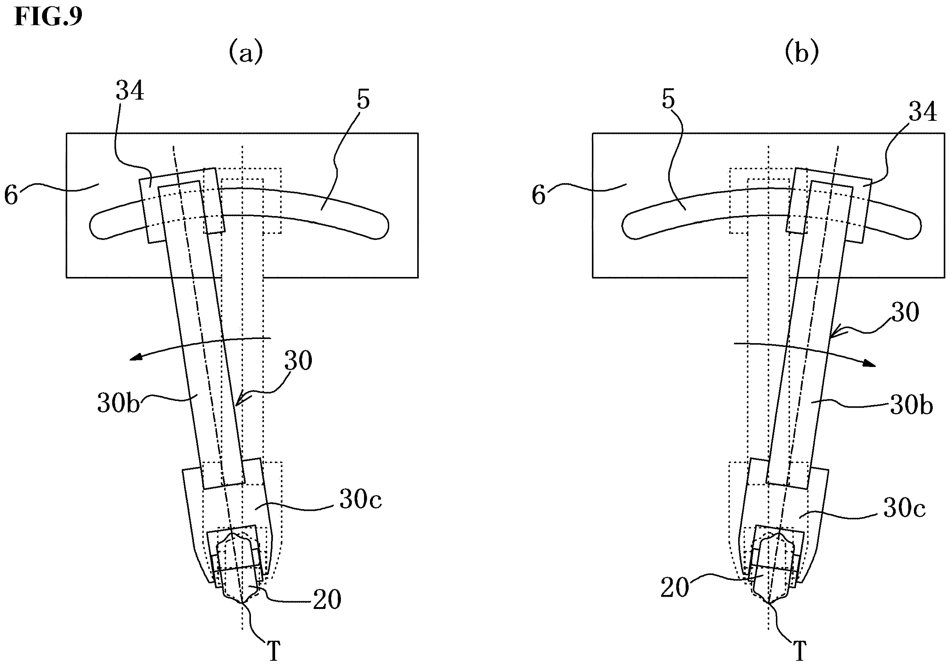

Figures 8 and 9 illustrate further another embodiment of the conveyance guide 1. Figure 8(a) is a front view of the conveyance guide 1, and Figure 8(b) is a side view of the conveyance guide 1 (in which a support wall 6 is illustrated only for its cross-section). Figure 9(a) is a view illustrating a state in which the guide roll 20 as the guide member 2 is tilted anticlockwise with respect to the sheet surface about a protruding distal end T of the guide roll 20 as a fulcrum, and Figure 9(b) is a view illustrating a state in which the guide roll 20 is tilted clockwise with respect to the sheet surface.

The conveyance guide 1 of the present embodiment includes the guide roll 20, and the base 30 connected to the guide roll 20. The base 30 includes a horizontal portion 30a, an inclined portion 30b that extends diagonally downward from one end portion of the horizontal portion 30a, and a support portion 30c that connects the inclined portion 30b and a roll shaft 21 of the guide roll 20, and rotatably holds the guide roll 20. Although the present embodiment exemplarily illustrates a case where the rotatable guide roll 20 is used as the guide member 2, the guide member 2 may be a member adapted to slide on the inner surface of the strip plastic film F while being in contact therewith, or adapted to be in sliding contact therewith.

The other end portion of the horizontal portion 30a is provided with a guide 34 that is adapted to pass through an upwardly projecting slit 5 provided in the support wall 6. As illustrated in Figure 9, when the guide 34 is moved along the slit 5 with the protruding distal end T of the guide roll 20 prevented from moving, that is, when the guide 34 is moved along the slit 5 about the protruding distal end T as a fulcrum, the conveyance guide 1 (or the guide roll 20) can be tilted. This can adjust the conveyance path for the strip plastic film F.

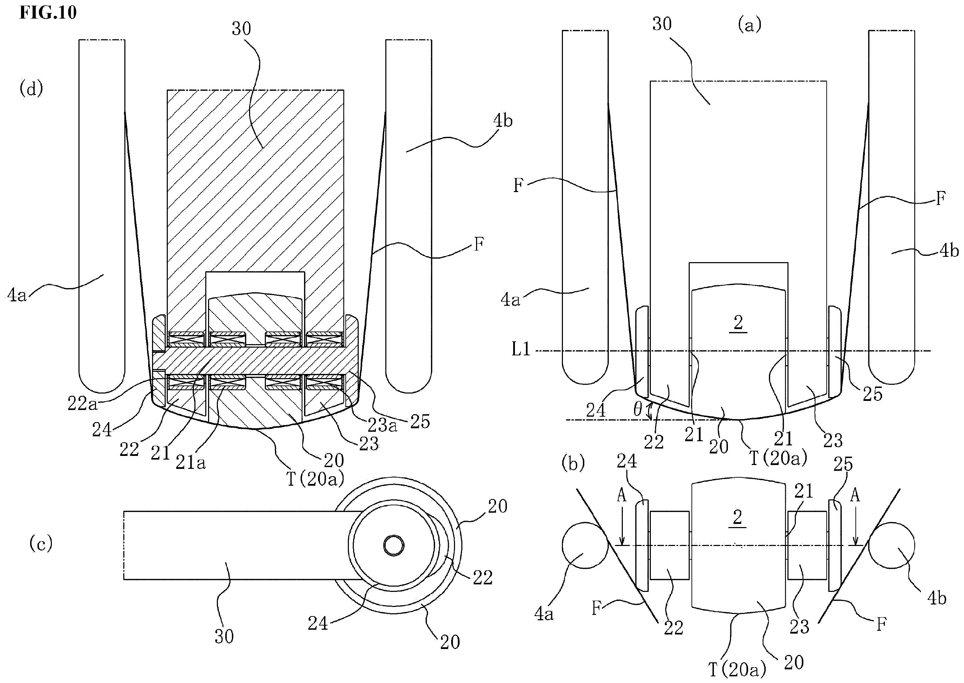

Figure 10 illustrates still another embodiment of the conveyance guide 1. Figure 10(a) is a plan view of the conveyance guide 1, Figure 10(b) is a front view thereof, Figure 10(c) is a left side view thereof, and Figure 10(d) is a cross-sectional view thereof along a position A-A in Figure 10(b). The conveyance guide 1 includes a non-driven-type guide roll 20 that is adapted to be in contact with the inner surface of the strip plastic film F, and rotate by means of bearings 21a, support portions 22 and 23 that respectively rotatably support the opposite end portions of the roll shaft 21 of the guide roll 20 by means of bearings 22a and 23a, the base 30 connected to the support portions 22 and 23, non-driven-type sub-guide rolls 24 and 25 serving as sub-guides provided at opposite ends of the roll shaft 21, and a moving means for moving the roll shaft 21 to adjust the installation positions of the guide roll 20 and the sub-guide rolls 24 and 25. Although the sub-guides of the present embodiment include the sub-guide rolls 24 and 25 that are adapted to rotate while being in contact with the strip plastic film F, the sub-guides may be members adapted to slide on the inner surface of the strip plastic film F while being in contact therewith, or adapted to be in sliding contact therewith.

In the present embodiment, the guide roll 20 and the sub-guide rolls 24 and 25 are configured to rotate individually. However, it is also possible to configure the guide roll 20 and the sub-guide rolls 24 and 25 to rotate integrally with the roll shaft 21 by fixing the guide roll 20 to the roll shaft 21.

As the moving means 3, a moving means is applied that includes a detection means (not illustrated) for detecting the conveyance path for the strip plastic film F on the entry side and/or the exit side of the conveyance guide 1, and a control unit (not illustrated) configured to operate the base 30 using a drive source (not illustrated), such as a hydraulic cylinder or an air pressure cylinder, based on information detected by the detection means to move, rotate, or tilt the roll shaft 21 together with the base 30 as illustrated in Figures 3, 4, 6, 7, and 9, thereby adjusting the installation position of the roll shaft 21, and thus changing the conveyance path for the strip plastic film F.

Note that the guide roll 20 may be moved together with the bearings 21a of the roll shaft 21 if the support portions 22 and 23, which house and hold the respective bearings 21a, are coupled to the base 30 of the moving means 3.

In the conveyance guide 1 with such a configuration, it is possible to adjust the installation position of the guide roll 20 by moving the guide roll 20 in the direction of its axial core L1 within the horizontal plane including the axial core L1, rotating the guide roll 20 within the horizontal plane including the axial core L1, or tilting the guide roll 20 in a direction orthogonal to the width direction of the strip plastic film F as in the previous embodiments (see Figures 1 to 9).

The guide roll 20 is preferably the one including a roll body having a constant roll diameter across the width direction of the guide roll 20 as illustrated in Figures 1 to 7, or the one including a barrel-shaped roll body having a diameter that gradually increases in a direction from each end portion toward the central portion in the width direction of the guide roll 20 and in which the central portion protrudes beyond the distal end portions of the support portions 22 and 23 (i.e., the protruding distal end T) as illustrated in Figure 10. Note that the surface of the roll body of the guide roll 20 is formed in an arc shape or a tapered shape to allow the angle θ between a straight line, which is parallel with the axial core L1 of the guide roll 20 and includes the protruding distal end T, and the surface of the roll body illustrated in Figure 10(a) to be in the range of 1 to 70°, or preferably, 20 to 60°.

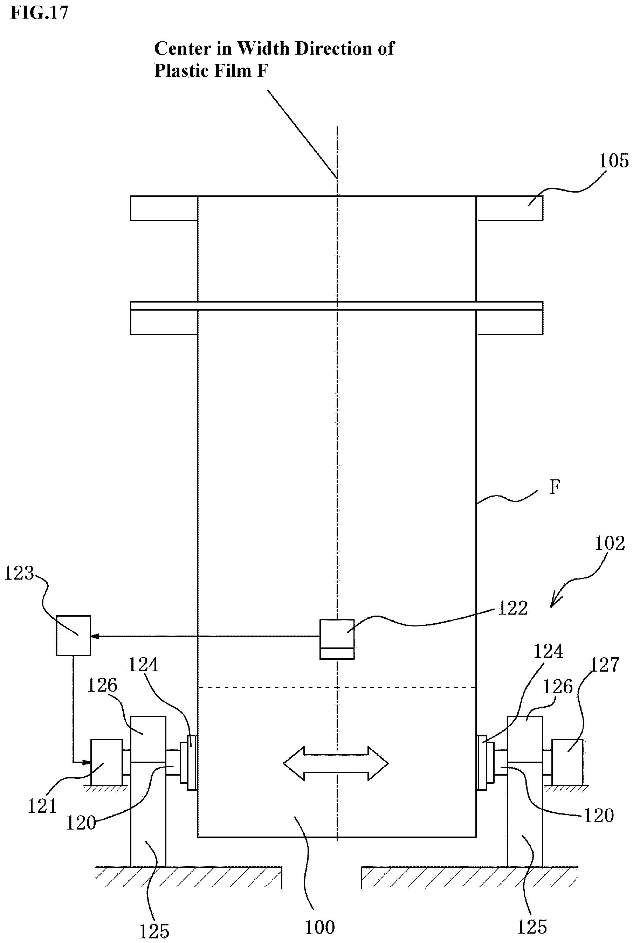

When such a guide roll 20 including the roll body with the protruding distal end T is used, the tension, the frictional force, and the peripheral speed of the guide roll 20 with respect to the strip plastic film F are maximum at the position of the protruding distal end T with the maximum roll diameter (i.e., a maximum-diameter portion 20a), while the tension, the frictional force, and the peripheral speed of the guide roll 20 with respect to the strip plastic film are minimum at the positions of the opposite end portions with the minimum roll diameter (i.e., minimum-diameter portions). Therefore, according to the guide roll 20 illustrated in Figure 10, since the frictional resistance between the guide roll 20 and the strip plastic film F is high at the central portion of the roll body (i.e., the protruding distal end T), the central position in the width direction of the strip plastic film F will move (i.e., easily slide) toward the protruding distal end T as the roll shaft 21 is moved, rotated, or tilted together with the base 30 by the moving means 3. Therefore, when the strip plastic film F is folded in two at its central portion in the width direction at a position immediately below the conveyance guide 1, for example, it is possible to allow the central position in the width direction of the film to precisely coincide with a machine center C (see Figure 17) described below. This allows the opposite end edges in the width direction of the strip plastic film F to be accurately aligned one on top of the other.

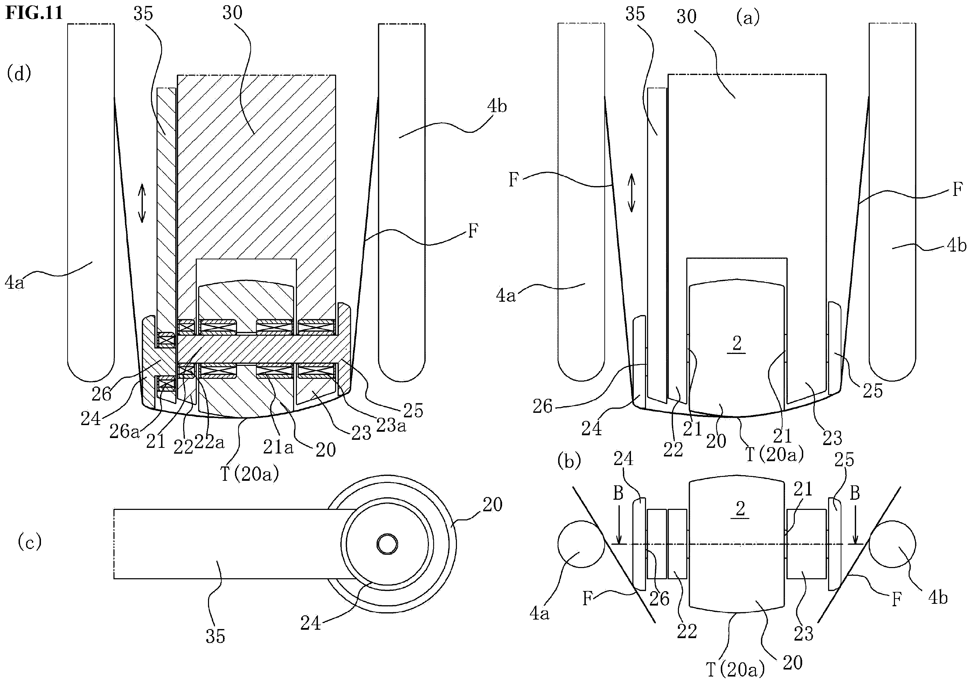

Figure 11 illustrates yet another embodiment of the conveyance guide 1. Figure 11(a) is a plan view, Figure 11(b) is a front view, Figure 11(c) is a left side view (which does not illustrate rods), and Figure 11(d) is a cross-sectional view along a position B-B in Figure 11(b). In the conveyance guide 1 of the present embodiment, the sub-guide roll 24 serving as the sub-guide in the conveyance guide 1 of the embodiment illustrated in Figure 10 is configured to be movable (see the arrow in the drawing) along the axial cores of the rods 4a and 4b. Although only the sub-guide roll 24 is configured to be movable in the present embodiment, both the sub-guide rolls 24 and 25 may be configured to be movable.

The sub-guide roll 24 is provided at an end portion of a roll shaft 26, which is different from the roll shaft 21 of the guide roll 20 and the sub-guide roll 25, and is rotatable integrally with the roll shaft 26 by means of a bearing 26a. The sub-guide roll 24 is also configured to be able to move the roll shaft 26 together with the bearing 26a along the axial cores of the rods 4a and 4b by means of a slider 35 that holds the roll shaft 26 and the bearing 26a. Further, the sub-guide roll 24 detects the conveyance path for the strip plastic film F on the entry side and/or the exit side of the conveyance guide 1 using a detection means, and operates the slider 35 using a drive source (not illustrated), such as a hydraulic cylinder or an air pressure cylinder, based on information detected by the detection means. Accordingly, the sub-guide roll 24 moves the strip plastic film F together with the roll shaft 26 and the bearing 26a in a direction in which the strip plastic film F is pressed or in a direction away from the strip plastic film F. This can change the tension and the frictional resistance of the strip plastic film F with respect to the guide roll 20, and thus change the conveyance path for the strip plastic film F.

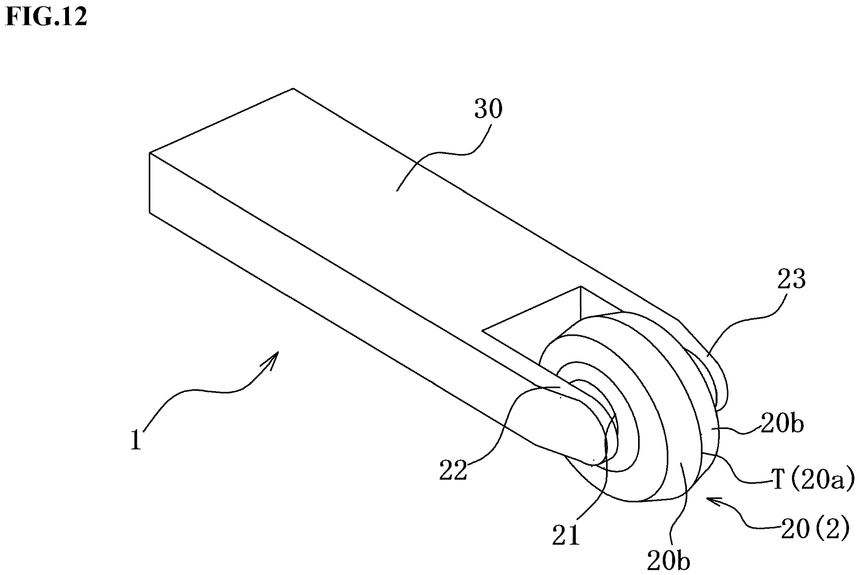

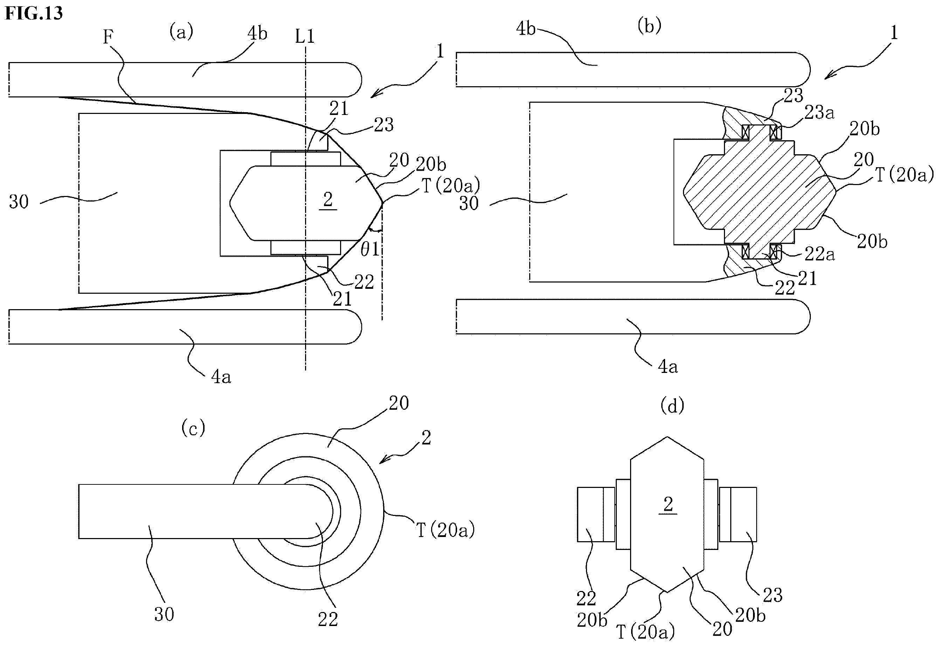

Figure 12 is a perspective view illustrating yet another embodiment of the conveyance guide 1, Figure 13(a) is a plan view of the conveyance guide 1 in Figure 12, Figure 13(b) is a view illustrating a cross-section of a part of the guide roll 20 and the support portions 22 and 23, Figure 13(c) is a left side view, and Figure 13(d) is a front view. The conveyance guide 1 of the present embodiment includes the non-driven-type guide roll 20 that is adapted to be in contact with the inner surface of the strip plastic film F, the support portions 22 and 23 that rotatably support the opposite end portions of the roll shaft 21 of the guide roll 20 by means of the bearings 22a and 23a, the base 30 connected to the support portions 22 and 23, and a moving means (not illustrated) for moving the roll shaft 21 to adjust the installation position of the guide roll 20.

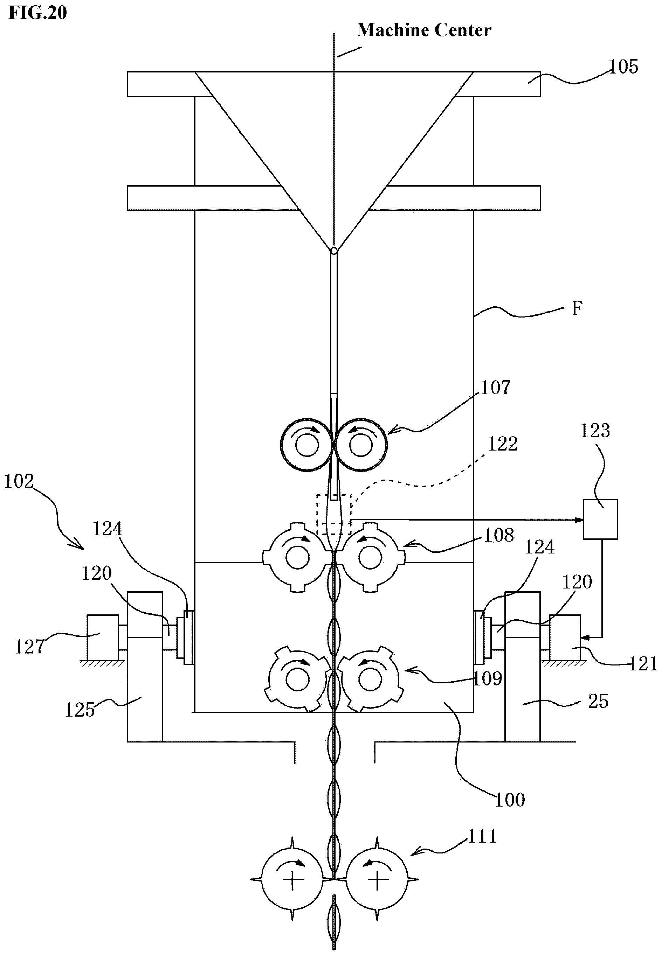

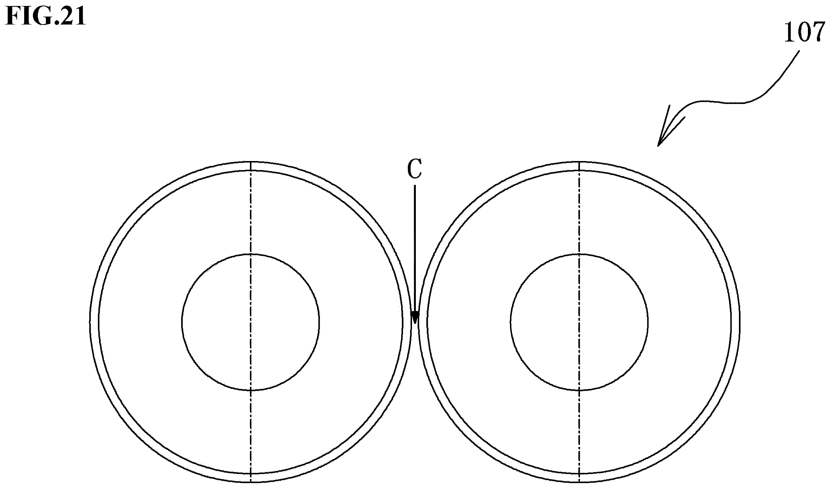

The guide roll 20 of the present embodiment includes a roll body adapted to have the strip plastic film F wound thereon. The roll body has a maximum-diameter portion 20a with the maximum roll diameter at the central portion in the width direction of the roll body, and reduced-diameter portions 20b, which have a roll diameter gradually decreasing toward the opposite end portions in the width direction of the roll body, on the opposite sides of the maximum-diameter portion 20a. According to the conveyance guide 1 of the present embodiment, the maximum-diameter portion 20a (i.e., the protruding distal end T) of the guide roll 20 greatly protrudes beyond the distal ends of the support portions 22 and 23, and the strip plastic film F is wound on the maximum-diameter portion 20a and the reduced-diameter portions 20b of the guide roll 20. Thus, when the guide roll 20 is moved, rotated, or tilted via the base 30, the tension and the frictional resistance of the strip plastic film F on the maximum-diameter portion 20 become high as described above. This allows the wound strip plastic film F to easily slide toward the maximum-diameter portion 20a (i.e., the protruding distal end T) along the surface of the roll body. Therefore, when the guide roll 20 is moved, rotated, or tilted via the base 30, it is possible to allow the central position in the width direction of the strip plastic film F or the opposite end edge positions in the width direction of the strip plastic film F to promptly and precisely coincide with a desired position(s). For example, when the strip plastic film F is folded in two at its central position in the width direction at a position immediately below the conveyance guide 1, it is possible to allow the central position in the width direction of the film to precisely coincide with a machine center C (see Figures 20 and 21) described below. This allows the opposite end edges in the width direction of the strip plastic film F to be accurately aligned one on top of the other.

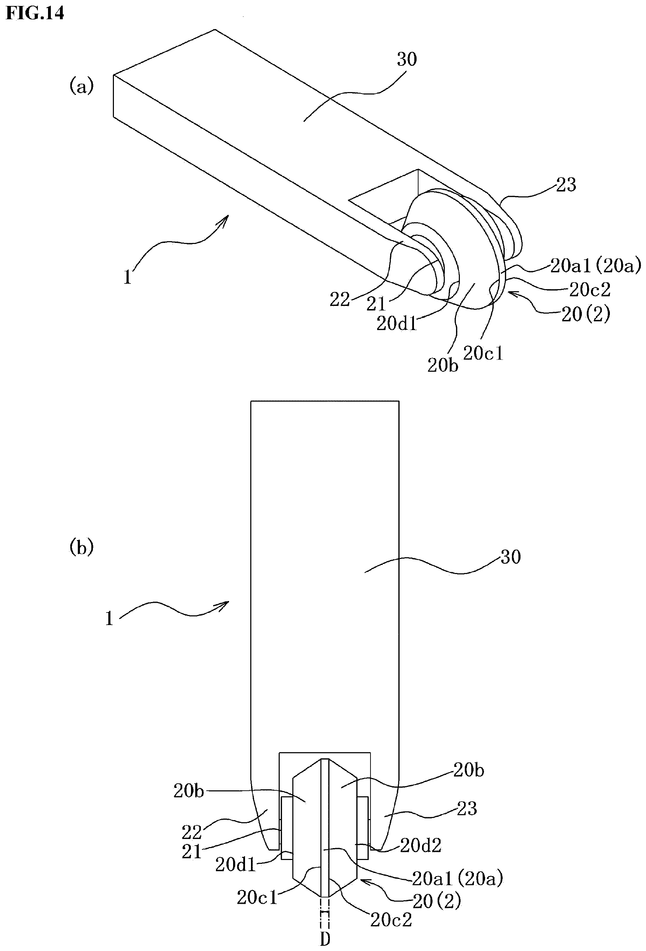

The maximum-diameter portion 20a (i.e., the protruding distal end T) may have a projecting shape, such as an R-shape formed at the distal end as illustrated in Figures 12 and 13, or a strip body 20a1 that forms a winding surface parallel with the axial core of the roll shaft 21 of the guide roll 20 as illustrated in Figures 14(a) and 14(b).

Note that when the maximum-diameter portion 20a is formed of the strip body 20a1 as illustrated in Figure 14, it is possible to allow the strip plastic film F wound on the guide roll 20 to easily slide toward the strip body 20a1 that is the maximum-diameter portion 20a as the guide roll 20 is moved, rotated, or tilted via the base 30 as described above. Further, in such a case, the strip plastic film F is strongly in contact with four points that are boundary corner portions 20c1 and 20c2, which form boundaries between the maximum-diameter portion 20a and the respective reduced-diameter portions 20b, and end edge corner portions 20d1 and 20d2, which have the minimum roll diameter, of the reduced-diameter portions 20b. Therefore, it is possible to perform highly responsive control in changing the conveyance path for the strip plastic film F, and thus allow the central position in the width direction of the strip plastic film F or the opposite end edge positions in the width direction of the strip plastic film F to promptly and precisely coincide with a desired position(s). Note that the width dimension D of the strip body 20a1 in the direction of the roll shaft 21 is preferably about 0.2 mm to 5.0 mm, in particular, about 0.5 mm.

Note that the surface of the roll body of the guide roll 20 is preferably formed in an arc shape or a tapered shape to allow the angle θ1 between a straight line, which is parallel with the axial core L1 of the guide roll 20 and includes the maximum-diameter portion 20a (i.e., the protruding distal end T), and the surface of the roll body of the guide roll 20 illustrated in Figure 13(a) to be in the range of 1 to 70°, or preferably, 20 to 60° so as to allow the strip plastic film F to easily slide toward the maximum-diameter portion 20a (i.e., the protruding distal end T). Note that the angle for the guide roll 20 illustrated in Figure 14 may be set to a similar angle.

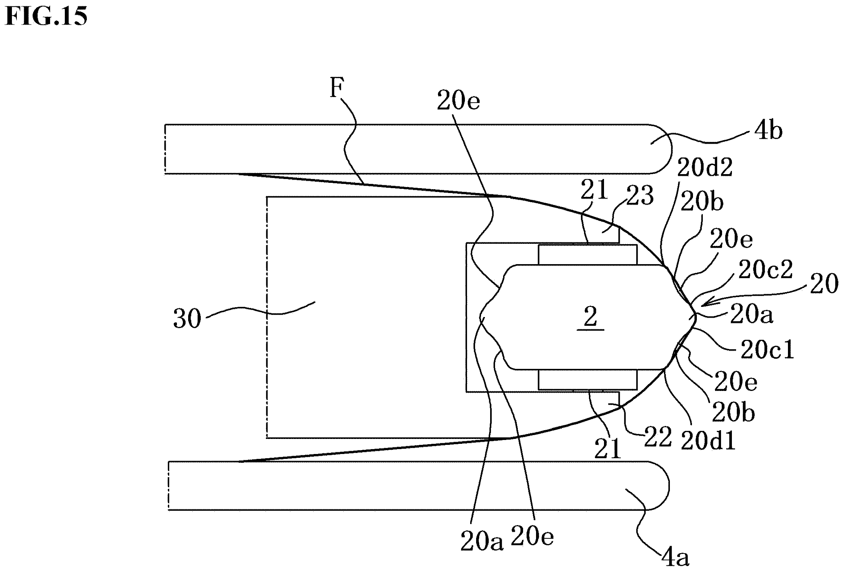

The guide roll 20 may be provided with recess portions 20e for forming non-contact regions, each adapted to be not contacted by the strip plastic film F, between the boundary corner portion 20c1 and the end edge corner portion 20d1 and between the boundary corner portion 20c2 and the end edge corner portion 20d2 of the reduced-diameter portions 20b as illustrated in Figure 15.

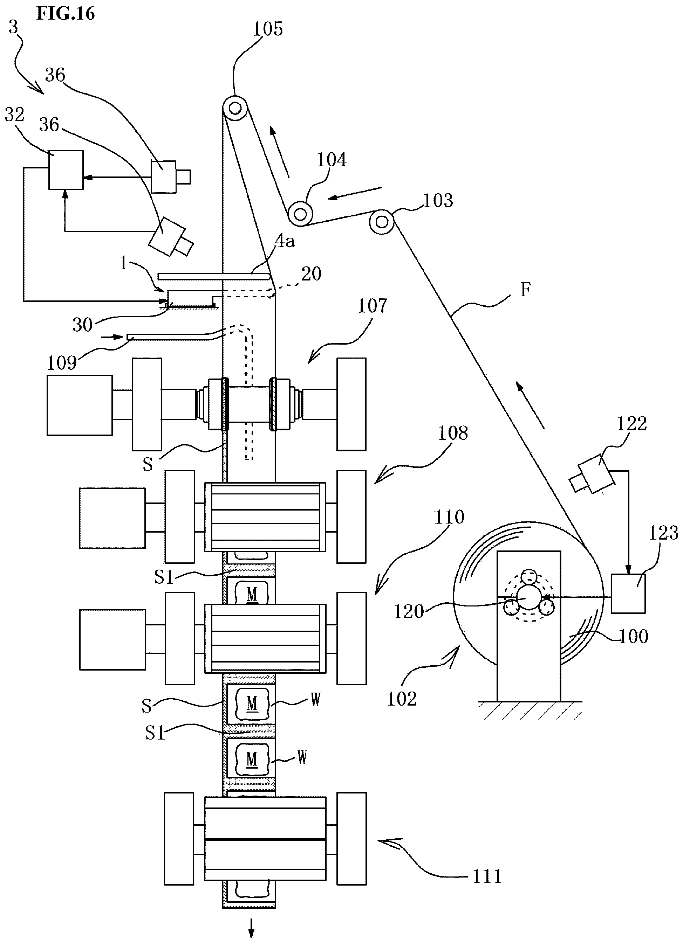

Figure 16 is a view illustrating a vertical filling and packing machine as an embodiment of a bag-making device including the conveyance guide 1 with the foregoing configuration. Note that the bag-making device of the present invention is not limited to a particular device, and may be, other than the vertical filling and packing machine, any device, such as a horizontal filling and packing machine or a vertical or horizontal bag-making machine, that includes a conveyance guide adapted to allow the strip plastic film F, which is conveyed continuously, to be folded at a predetermined position, and a heat-sealing means for forming the folded strip plastic film F into a bag shape by forming a vertical sealed portion and/or a horizontal sealed portion in the longitudinal direction and/or the width direction, and can continuously produce a plurality of packing bags.

Reference sign 100 in Figure 16 denotes a raw film formed by winding the strip plastic film F in a rolled form, reference sign 102 denotes an unwind roll rotatably supported via a bearing and adapted to sequentially unwind the strip plastic film F from the raw film 100, reference signs 103 and 104 denote guide rolls each adapted to change the traveling direction of the unwound strip plastic film F, and reference sign 105 denotes an upper roll held in a horizontal posture and adapted to change the orientation of the strip plastic film F into a vertical conveyance posture (i.e., a perpendicular posture). Note that the unwind roll 102 includes a means for suppressing meandering of the strip plastic film F unwound from the raw film 100 as described below.

The film structure of the strip plastic film F is not limited to a particular structure as long as it includes at least a base layer and a sealant layer. In the present embodiment, the strip plastic film F is used that includes a base layer made of a uniaxially or biaxially wound polyethylene terephthalate film layer or nylon resin film layer, for example, and a sealant layer made of an unwound polyethylene layer or polypropylene layer, for example. For example, a laminated plastic film having an aluminum foil, an aluminum alloy foil, an aluminum vapor-deposition layer, and/or paper may be suitably used.

Reference sign 107 in Figure 16 denotes a pair of vertical seal rolls arranged immediately below the conveyance guide 1, and adapted to pinch, press, and heat the overlapped edge portions of the strip plastic film F that has been folded in two to continuously form vertical sealed portions S, and reference sign 108 denotes a pair of horizontal seal rolls provided immediately below the pair of vertical seal rolls 107, and adapted to pinch, press, and heat the strip plastic film F having the vertical sealed portion S formed therein to form a horizontal sealed portion S1 in the strip plastic film F in its width direction. Further, reference sign 109 denotes a filling nozzle provided between the pair of vertical seal rolls 107 and the upper roll 105, and adapted to fill the inner space of the strip plastic film F, which is partitioned by the horizontal sealed portion S1 and the vertical sealed portion S, with a packing object M, reference sign 110 denotes a pair of cooling rolls provided downstream of the pair of horizontal seal rolls 108, and adapted to cool the horizontal sealed portion S1; and reference sign 111 denotes a flying cutter provided downstream of the pair of cooling rolls 110, and adapted to cut a plurality of continuous packing bags W along their horizontal sealed portions S1 to separate the packing bags W into individual bags.

The conveyance guide 1 may be provided on the upstream side of the pair of vertical seal rolls 107 at a position of 50 to 500 mm, or preferably, 100 to 300 mm from the pair of vertical seal rolls 107, but the conveyance guide 1 may also be provided on the downstream side of the installation position of the filling nozzle 109.

Herein, the pair of vertical seal rolls 107 include a drive motor and a gear mechanism (which are not illustrated) adapted to rotationally drive the pair of vertical seal rolls 107 in opposite directions at a constant speed, and a pair of air cylinders, for example, adapted to press a bearing block, which supports the opposite end portions of one of the vertical seal rolls by means of bearings, against a bearing block that supports the opposite end portions of the other vertical seal roll by means of bearings.

The present embodiment illustrates a case where three-side-sealed packing bags W are produced. Meanwhile, when four-side-sealed packing bags are produced, the pair of vertical seal rolls 7 are further provided with a seal bar for sealing the folded position of the strip plastic film F so that a vertical sealed portion S is formed in each of the overlapped side edge portions and the folded portion of the strip plastic film F using the pair of vertical seal rolls 7.

The pair of horizontal seal rolls 108 have two functions: alternately forming one horizontal sealed portion S1 for forming an inner space in cooperation with the vertical sealed portion S, and forming another horizontal sealed portion S1 for tightly sealing the inner space after filling the inner space with a packing object M.

Although the present embodiment exemplarily illustrates a case where pairs of seal rolls (i.e., the pair of vertical seal rolls 107 and the pair of horizontal seal rolls 108) are provided as the heat-sealing means, the heat-sealing means may be any means that can seal the strip plastic film F, which has been folded in at least two in its width direction, in the longitudinal direction and/or the width direction. For example, a pair of seal plates may be used.

Reference sign 36 denotes a detection means provided immediately above the conveyance guide 1. The detection means 36 may be any means that can detect the central position in the width direction of the strip plastic film F or the end edge positions in the width direction of the strip plastic film F. For example, it is possible to use a CCD camera or various types of edge sensors (e.g., a detection means for detecting the width of the strip plastic film F using an image sensor, or a detection means for irradiating the strip plastic film F with ultrasound or a laser beam, for example, to detect its edges based on a beam transmitted through or reflected by a detector). Note that the detection means 36 may be provided between the conveyance guide 1 and the pair of vertical seal rolls 107.

Information (i.e., the central position in the width direction of the strip plastic film F or the end edge positions in the width direction of the strip plastic film F) detected by the detection means 36 is transmitted to the control unit 32 so that a deviation from a setting value input to the control unit 32 in advance is calculated. When the control unit 32 has determined that the calculated deviation from the setting value is outside a prescribed range, the guide roll 20 is moved, rotated, or tilted to a predetermined position via the base 30 by the drive source 31 in response to an instruction from the control unit 32. This allows the strip plastic film F wound on the guide roll 20 to slide along the roll body of the guide roll 20, and thus, the conveyance path for the strip plastic film F is changed.

Note that the conveyance path for the strip plastic film F means the passage for the strip plastic film F, which has been unwound by the unwind roll 102, up to the pair of vertical seal rolls 107. Changing the conveyance path for the strip plastic film F means moving the strip plastic film F in its width direction while it is being conveyed.

In this manner, the conveyance guide 1 adjusts/controls the installation position of the guide roll 20, which has the inner surface of the strip plastic film F wound thereon, and changes the conveyance path for the strip plastic film F, so that the central position in the width direction of the strip plastic film F is possible to coincide with the machine center C related to the vertical filling and packing machine described below. Therefore, the conveyance guide 1 allows the strip plastic film F to be folded in two at its central position in the width direction, and thus allows the opposite end edges of the film to be accurately aligned one on top of the other. This can avoid misaligned end edges that have unavoidably occurred during the formation of the vertical sealed portion S with the pair of vertical seal rolls 107.

In conventional vertical filling and packing machines, to suppress meandering of the strip plastic film F used due to uneven thickness, for example, it has been necessary to arrange the upper roll 105 at a position higher than the pair of vertical seal rolls 107 by about 1000 mm, and apply tension to the strip plastic film F, which is being conveyed, between the upper roll 105 and the pair of vertical seal rolls 107, thereby adjusting strain. In contrast, according to the vertical filling and packing machine of the present embodiment, meandering of (or the conveyance path for) the strip plastic film F can be adjusted by the conveyance guide 1. Thus, the upper roll 105 may be arranged at a low position (about -500 mm), which allows the vertical filling and packing machine to be designed compact.

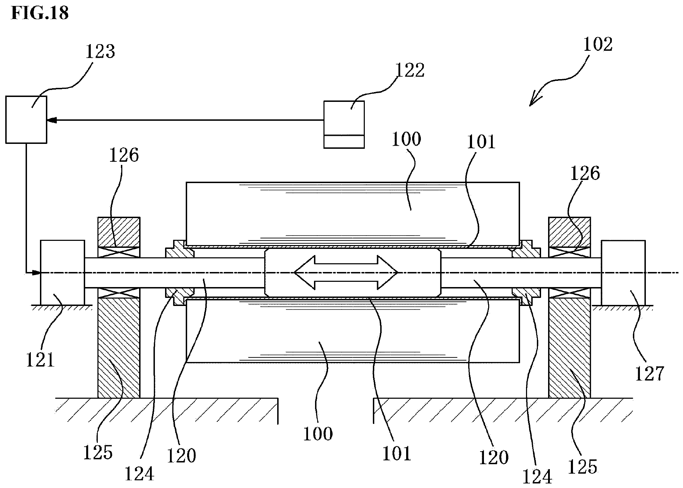

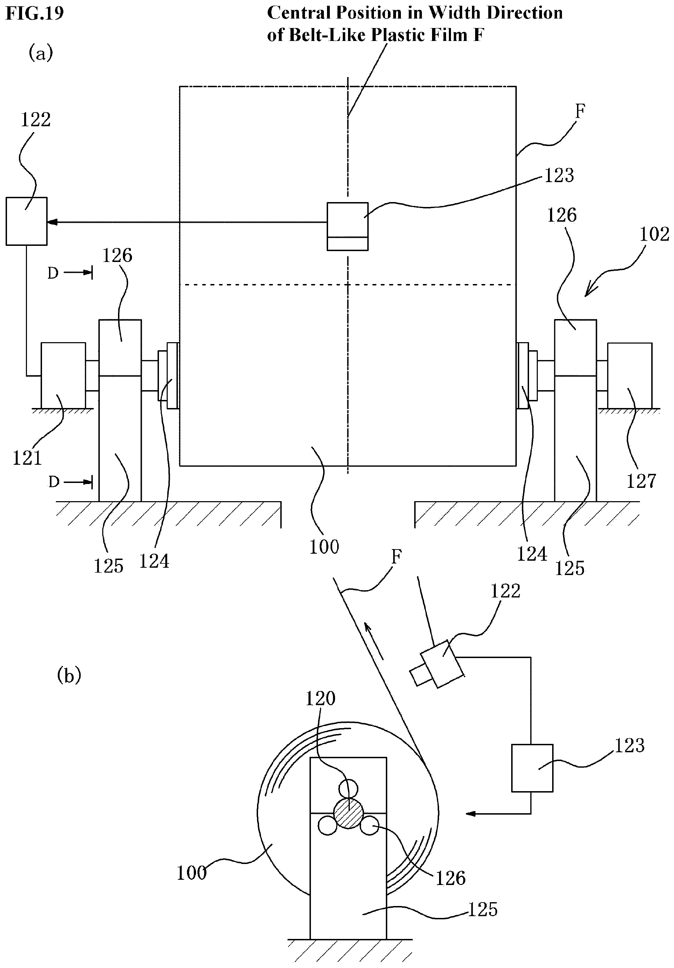

Next, the configuration of the unwind roll 102 in Figure 16 will be described. Figure 17 is a right side view of the vertical filling and packing machine in Figure 16, Figure 18 is a cross-sectional view illustrating the structure of the unwind roll 102, Figure 19(a) is a view illustrating the configuration of the unwind roll 102, Figure 19(b) is a view in the direction of an arrow D-D in Figure 19(a), Figure 20 is a left side view of the vertical filling and packing machine in Figure 16, which illustrates the machine center of the vertical filling and packing machine, and Figure 21 is a view illustrating the bite center of the pair of vertical seal rolls 107 in Figure 20.

As illustrated in Figure 17, the unwind roll 102 mainly includes a roll body 120 adapted to have the raw film 100 put thereon, a moving means 121 connected to an axial end of the roll body 120, a detection means 122 for detecting the central position in the width direction of the strip plastic film F that has been just unwound from the raw film 100, and a control unit 123 configured to drive the moving means 121 upon receiving information from the detection means 122.

As illustrated in Figure 18, the raw film 100 has a paper core 101 made of an annular body at its center in the radial direction. The raw film 100 has the strip plastic film F wound on its paper core 101, and is put on the roll body 120 of the unwind roll 102 via the paper core 101. Note that the annular body, which has the strip plastic film F wound thereon, may be not only the paper annular body (i.e., the paper core 101) of the present embodiment, but also various other annular bodies, such as a plastic annular body or a metal annular body.

Annular stoppers 124 are fitted to the opposite end portions of the paper core 101 so that the raw film 100 is fixed to the roll body 120 of the unwind roll 102, and thus is configured to rotate integrally with the roll body 120. Note that a method of fixing the raw film 100 to the roll body 120 is not limited to a particular method. For example, the roll body 120 may have an air shaft structure with a shaft designed to have an increased or decreased diameter so that the raw film 100 may be fixed to or unfixed from the roll body 120 via the paper core 101, or the raw film 100 may be mechanically fixed to the roll body 120 without the use of an air shaft (i.e., a mechanical chuck).

The opposite end portions of the roll body 120 are respectively rotatably supported by rotary support portions 125 via bearings 126. One axial end of the roll body 120 is connected to the moving means 121, such as an electric motor or an actuator that uses hydraulic pressure or air pressure. Thus, the roll body 120 is configured to slide (i.e., move forward or backward) along its axial core as the moving means 121 is driven in accordance with an instruction from the control unit 123 described below. Therefore, with the sliding of the roll body 120, the raw film 100 also moves integrally with the roll body 120.

The other axial end of the roll body 120 may be provided with a braking means or a driving means 127. Adjusting the rotational speed of the roll body 120 with the braking means or the driving means 127 allows the strip plastic film F to be fed out of the raw film 100 at a desired speed.

Although the present embodiment exemplarily illustrates a case where the roll body 120 is moved along its axial core, it is also possible to provide the body portion of the roll body 120 with spline teeth, and provide a through-portion formed inside the paper core 101 with spline grooves that are adapted to fit the spline teeth, and thus allow only the raw film 100 to slide along the axial core of the roll body 120 using the spline structure, for example. In such a case, the roll body 120 need not be moved along its axial core. To allow the raw film 100 to slide along the axial core of the roll body 120, it is acceptable as long as the stoppers 124 are structured to be movable along the axial core of the roll body 120, for example, and the stoppers 124 are operated in accordance with an instruction from the control unit 123 so as to allow the raw film 100 to move along the axial core of the roll body 120 together with the paper core 101.

As illustrated in Figure 19, the detection means 122 for detecting the central position in the width direction of the strip plastic film F, which has been just unwound from the raw film 100, is provided at a position above the raw film 100. Note that the detection means 122 may be any means that can detect the central position in the width direction of the strip plastic film F. For example, it is possible to determine the central position in the width direction of the strip plastic film F by detecting the opposite side edge positions in the width direction thereof using a CCD camera or various types of edge sensors (e.g., a method of detecting the width of the plastic film F using an image sensor, or a method of irradiating the plastic film F with ultrasound or a laser beam, for example, to detect its edges based on a beam transmitted through or reflected by a detector).

Information (i.e., the central position in the width direction of the plastic film F) detected by the detection means 122 is transmitted to the control unit 123 so that a deviation from a setting value input to the control unit 123 in advance is calculated. When the control unit 123 has determined that the calculated deviation from the setting value is outside a prescribed range, the moving means 121 of the unwind roll 102 is driven in response to an instruction from the control unit 123 so as to allow the roll body 120 to slidingly move based on the deviation. In the case of the vertical filling and packing machine in Figure 16, it is assumed that the setting value input to the control unit 123 is the central position of the machine that constitutes the vertical filling and packing machine.

As the roll body 120 slidingly moves, in the vertical filling and packing machine of Figure 16, the central position in the width direction of the strip plastic film F, which has been unwound from the raw film 100, is automatically adjusted so that it always passes through the central position of the machine that constitutes the vertical filling and packing machine. This can effectively suppress meandering of the strip plastic film F that is being conveyed to the downstream side. Therefore, even when there is a possibility that the strip plastic film F may meander to a great degree due to a difference in tension in the film that may occur at the time of replacement of the raw film 100, for example, the traveling position of the strip plastic film F can be automatically adjusted without the operation of the vertical filling and packing machine stopped. Note that stable adjustment can be performed by setting the detection timing of the detection means 122 (i.e., the sliding of the roll body 120) to once every 0.1 second to every 10 seconds.

Note that the machine center position of the machine that constitutes the vertical filling and packing machine is, as illustrated in Figure 20, a position between the pair of seal rolls, that is, each of a position between the pair of vertical seal rolls 107 and a position between the pair of horizontal seal rolls 108, in particular, the bite center of the pair of vertical seal rolls 107 or the bite center of the pair of horizontal seal rolls 108. Note that as each of the pair of vertical seal rolls 107 and the pair of horizontal seal rolls 108, it is possible to use a pair of seal rolls having a gap therebetween adjusted to a predetermined value from beginning, or a pair of seal rolls that are in contact with each other when the strip plastic film F is not bit between them, but have a predetermined gap held therebetween when the strip plastic film F is bit between them. In both cases, the bite center means the center of the gap between the pair of seal rolls in which the strip plastic film F is bit as illustrated in Figure 21. If the center in the width direction of the strip plastic film F is allowed to coincide with the machine center C, it is possible to allow the opposite end portions in the width direction of the strip plastic film F to be accurately aligned one on top of the other when the strip plastic film F is folded in two in its longitudinal direction.

When the central position in the width direction of the strip plastic film F is set such that it passes through the central position of the machine that constitutes the vertical filling and packing machine, it is possible to eliminate the labor of changing the setting of the control unit 123 even if the strip plastic film F used is changed. Further, when the strip plastic film F is fed out in keeping with the machine center, it is possible to effectively suppress meandering of the film, and thus suppress the occurrence of seal failures (e.g., the leakage of a liquid due to wrinkles or the generation of pinholes) during vertical sealing or horizontal sealing.

It is also possible to, without inputting a setting value to the control unit 123, allow the detection means 122 to concurrently detect the central position in the width direction of the strip plastic film F, and a mark provided at a required position of the vertical filling and packing machine (i.e., a mark that coincides with the machine center), and then slide the roll body 120 (or the raw film 100) along its axial core so as to allow the central position in the width direction of the strip plastic film F to coincide with the mark.

As described above, adjustment (i.e., centering) of the central position in the width direction of the strip plastic film F based on the movement of the raw film 100 may be performed using the unwind roll 102 (i.e., the roll body 120, the moving means 121, the detection means 122, and the control unit 123). Therefore, there is no need to improve the machine body of a bag-making device, such as a vertical filling and packing machine, and further, the unwind roll 102 may be attached to the already-existing bag-making device later. In addition, there is an advantage in that the unwind roll 102 may be applied to any type of bag-making device, and thus is versatile.

### Reference Signs List

1 conveyance guide
20 guide roll
20a maximum-diameter portion
20a1 strip body
20b reduced-diameter portion
20c1, 20c2 boundary corner portion
20d1, 20d2 end edge corner portion
20e recess portion
21 roll shaft
21a bearing
22, 23 support portion
22a, 23a bearing
24, 25 sub-guide roll
26 roll shaft
26a bearing
3 moving means
30 base
30a horizontal portion
30b inclined portion
30c support portion
31 drive source
32 control unit
33 shaft body
34 guide
35 slider
36 detection means
4a, 4b rod
5 slit
6 support wall
100 raw film
101 paper core
102 unwind roll
103, 104 guide roll
105 upper roll
107 pair of vertical seal rolls
108 pair of horizontal seal rolls
109 filling nozzle
110 pair of cooling rolls
111 flying cutter
120 roll body
121 moving means
122 detection means
123 control unit
124 stopper
125 rotary support portion
126 bearing
127 braking means or driving means
F strip plastic film
W packing bag
M packing object
S vertical sealed portion
S1 horizontal sealed portion
T protruding distal end
P fulcrum
C machine center

## Claims

1. A method for conveying a strip plastic film, comprising, when a strip plastic film conveyed from an upstream side is wound on an outer surface of a guide member in at least a central region in a width direction of the film, and the strip plastic film is conveyed to a downstream side with the wound state maintained:
moving, rotating, or tilting the guide member that has the strip plastic film wound thereon via a base connected to the guide member to change frictional resistance of the strip plastic film with respect to the guide member and tension of the strip plastic film, thereby allowing the strip plastic film to slide along the outer surface of the guide member, and thus changing a conveyance path for the strip plastic film.

2. The method for conveying the strip plastic film according to claim 1,
wherein:
the movement of the guide member is a movement of the guide member in a direction along an axial core of the guide member within a horizontal plane including the axial core of the guide member,
the rotation of the guide member is a rotation of the guide member about a fulcrum set in advance within the horizontal plane including the axial core of the guide member, and
the tilting of the guide member is a tilting of the guide member in a direction orthogonal to the width direction of the strip plastic film.

3. A conveyance guide for a strip plastic film, the conveyance guide being adapted to guide a strip plastic film conveyed from an upstream side to a downstream side while allowing the strip plastic film to be wound on an outer surface of the conveyance guide, the conveyance guide comprising:
a guide member adapted to have wound thereon the strip plastic film in at least a central region in a width direction of the film;
a base connected to the guide member; and
moving means for moving, rotating, or tilting the guide member via the base with the strip plastic film wound on the guide member, thereby allowing the strip plastic film to slide along an outer surface of the guide member, and thus changing a conveyance path for the strip plastic film.

4. The conveyance guide for the strip plastic film according to claim 3,
wherein:
the movement of the guide member is a movement of the guide member in a direction along an axial core of the guide member within a horizontal plane including the axial core of the guide member,
the rotation of the guide member is a rotation of the guide member about a fulcrum set in advance within the horizontal plane including the axial core of the guide member, and
the tilting of the guide member is a tilting of the guide member in a direction orthogonal to the width direction of the strip plastic film.

5. The conveyance guide for the strip plastic film according to claim 3 or 4, wherein the moving means includes
a drive source adapted to move or rotate the guide member via the base,
detection means for detecting a central position and/or opposite end edge positions in the width direction of the strip plastic film on an upstream side and/or a downstream side of the guide member, and
a control unit configured to operate the drive source in accordance with a detection result of the detection means.

6. The conveyance guide for the strip plastic film according to claim 3 or 4, wherein the moving means includes
a drive source adapted to tilt the guide member via the base,
detection means for detecting a central position and/or opposite end edge positions in the width direction of the strip plastic film on an upstream side and/or a downstream side of the guide member, and
a control unit configured to operate the drive source in accordance with a detection result of the detection means.

7. The conveyance guide for the strip plastic film according to claim 6, wherein the base includes a shaft body connected to a rear end portion of the base, the shaft body being adapted to be rotated by the drive source so as to tilt the guide member via the base.

8. The conveyance guide for the strip plastic film according to claim 3 or 4, wherein the guide member includes a pair of rods arranged on at least one of an upstream side of the guide member, a downstream side of the guide member, and a lateral side at a position nearest the guide member, the pair of rods being adapted to hold a region of the strip plastic film, excluding a region of the strip plastic film wound on the guide member, while being in sliding contact with the held region such that opposite sides of the sliding contact region face each other.

9. The conveyance guide for the strip plastic film according to claim 3 or 4, wherein the guide member is a guide roll that is rotatably held via a bearing, and includes a rotary axial core lying along the width direction of the plastic film.

10. The conveyance guide for the strip plastic film according to claim 9, wherein the guide roll includes a roll body having a constant roll diameter across a width direction of the guide roll.

11. The conveyance guide for the strip plastic film according to claim 9, wherein the guide roll includes a maximum-diameter portion at a central portion in a width direction of the guide roll, and reduced-diameter portions connected to opposite sides of the maximum-diameter portion, the maximum-diameter portion having a maximum roll diameter, and the reduced-diameter portions each having a roll diameter that gradually decreases in a direction from the maximum-diameter portion toward end portions in the width direction of the guide roll.

12. The conveyance guide for the strip plastic film according to claim 11,
wherein:
the maximum-diameter portion includes boundary corner portions and a strip body located between the boundary corner portions, the boundary corner portions forming boundaries with the respective reduced-diameter portions, and the strip body forming a winding surface parallel with the axial core of the guide roll, and
each reduced-diameter portion includes a minimum-diameter portion with a minimum roll diameter, the minimum-diameter portion including an end edge corner portion for forming a winding end for the strip plastic film.

13. The conveyance guide for the strip plastic film according to claim 11, wherein each reduced-diameter portion includes a recess portion between each boundary corner portion and each end edge corner portion, the recess portion forming a non-contact region adapted to be not contacted by the strip plastic film.

14. The conveyance guide for the strip plastic film according to claim 9, wherein the guide roll includes sub-guides at opposite end portions in a width direction of a roll body of the guide roll, the sub-guides being adapted to allow the strip plastic film to slide on the sub-guides while being in contact with the strip plastic film, or adapted to rotate while being in contact with the strip plastic film.

15. The conveyance guide for the strip plastic film according to claim 14, wherein the sub-guide includes moving means that is movable in a direction in which the strip plastic film is pressed, or a direction away from the strip plastic film.

16. A bag-making device comprising:
an unwind roll adapted to sequentially unwind a strip plastic film from a raw film wound in a rolled form;
the conveyance guide according to any one of claims 3 to 15 that is adapted to guide the strip plastic film unwound by the unwind roll from an upstream side to a downstream side while having the strip plastic film wound on an outer surface of the conveyance guide; and
heat-sealing means for pinching, pressing, and heating the strip plastic film that has been folded in at least two on an exit side of the conveyance guide, thereby forming one or more sealed portions in the strip plastic film in a longitudinal direction and/or a width direction of the strip plastic film, and thus forming the strip plastic film into a bag shape.

17. The bag-making device according to claim 16, wherein the unwind roll includes
a roll body adapted to hold the raw film and rotatably supported via a bearing,
moving means connected to an axial end of the roll body, the moving means being adapted to move the roll body together with the raw film along an axial core of the roll body,
detection means for detecting a central position in the width direction of the strip plastic film that has been just unwound, and
a control unit configured to allow the moving means to move the roll body together with the raw film along the axial core of the roll body in accordance with information detected by the detection means, thereby changing the central position in the width direction of the strip plastic film related to the unwinding.

18. The bag-making device according to claim 17, wherein the roll body includes braking means or driving means for adjusting a rotational speed of the roll body.

19. The bag-making device according to claim 17 or 18, wherein the raw film includes an annular body adapted to have the strip plastic film wound on an outer surface of the annular body in a rolled form, the annular body including an inner through-hole portion that has fitted therein a body portion of the roll body so as to be rotatable in synchronization with rotation of the roll body.

## Amended claims

### Amended claims under Art. 19.1 PCT

1. A method for conveying a strip plastic film, comprising, when a strip plastic film conveyed from an upstream side is stretched on an outer surface of a guide member in at least a central region in a width direction of the film, and the strip plastic film is conveyed to a downstream side with the stretched state maintained, and is also folded in the width direction:
moving, rotating, or tilting the guide member that has the strip plastic film stretched thereon via a base connected to the guide member to change frictional resistance of the strip plastic film with respect to the guide member and/or tension of the strip plastic film, thereby allowing the strip plastic film to slide along the outer surface of the guide member, and thus changing a conveyance path for the strip plastic film, and also allowing the strip plastic film to be folded at a desired position in the width direction.

2. The method for conveying the strip plastic film according to claim 1,
wherein:
the movement of the guide member is a movement of the guide member in a direction along an axial core of the guide member within a horizontal plane including the axial core of the guide member,
the rotation of the guide member is a rotation of the guide member about a fulcrum set in advance within the horizontal plane including the axial core of the guide member, and
the tilting of the guide member is a tilting of the guide member in a direction orthogonal to the width direction of the strip plastic film.

3. A conveyance guide for a strip plastic film, the conveyance guide being adapted to allow a strip plastic film conveyed from an upstream side to be folded at a desired position in a width direction of the film while allowing the strip plastic film to be stretched on an outer surface of the conveyance guide and thus guiding the strip plastic film to a downstream side, the conveyance guide comprising:
a guide member adapted to have stretched thereon the strip plastic film in at least a central region in the width direction of the film;
a base connected to the guide member; and
moving means for moving, rotating, or tilting the guide member via the base with the strip plastic film stretched on the guide member, thereby allowing the strip plastic film to slide along an outer surface of the guide member, and thus changing a conveyance path for the strip plastic film.

4. The conveyance guide for the strip plastic film according to claim 3,
wherein:
the movement of the guide member is a movement of the guide member in a direction along an axial core of the guide member within a horizontal plane including the axial core of the guide member,
the rotation of the guide member is a rotation of the guide member about a fulcrum set in advance within the horizontal plane including the axial core of the guide member, and
the tilting of the guide member is a tilting of the guide member in a direction orthogonal to the width direction of the strip plastic film.

5. The conveyance guide for the strip plastic film according to claim 3 or 4, wherein the moving means includes
a drive source adapted to move or rotate the guide member via the base,
detection means for detecting a central position and/or opposite end edge positions in the width direction of the strip plastic film on an upstream side and/or a downstream side of the guide member, and
a control unit configured to operate the drive source in accordance with a detection result of the detection means.

6. The conveyance guide for the strip plastic film according to claim 3 or 4, wherein the moving means includes
a drive source adapted to tilt the guide member via the base,
detection means for detecting a central position and/or opposite end edge positions in the width direction of the strip plastic film on an upstream side and/or a downstream side of the guide member, and
a control unit configured to operate the drive source in accordance with a detection result of the detection means.

7. The conveyance guide for the strip plastic film according to claim 6, wherein the base includes a shaft body connected to a rear end portion of the base, the shaft body being adapted to be rotated by the drive source so as to tilt the guide member via the base.

8. The conveyance guide for the strip plastic film according to claim 3 or 4, wherein the guide member includes a pair of rods arranged on at least one of an upstream side of the guide member, a downstream side of the guide member, and a lateral side at a position nearest the guide member, the pair of rods being adapted to hold a region of the strip plastic film, excluding a region of the strip plastic film wound on the guide member, while being in sliding contact with the held region such that opposite sides of the sliding contact region face each other.

9. The conveyance guide for the strip plastic film according to claim 3 or 4, wherein the guide member is a guide roll that is rotatably held via a bearing, and includes a rotary axial core lying along the width direction of the plastic film.

10. The conveyance guide for the strip plastic film according to claim 9, wherein the guide roll includes a roll body having a constant roll diameter across a width direction of the guide roll.

11. The conveyance guide for the strip plastic film according to claim 9, wherein the guide roll includes a maximum-diameter portion at a central portion in a width direction of the guide roll, and reduced-diameter portions connected to opposite sides of the maximum-diameter portion, the maximum-diameter portion having a maximum roll diameter, and the reduced-diameter portions each having a roll diameter that gradually decreases in a direction from the maximum-diameter portion toward end portions in the width direction of the guide roll.

12. The conveyance guide for the strip plastic film according to claim 11,
wherein:
the maximum-diameter portion includes boundary corner portions and a strip body located between the boundary corner portions, the boundary corner portions forming boundaries with the respective reduced-diameter portions, and the strip body forming a winding surface parallel with the axial core of the guide roll, and
each reduced-diameter portion includes a minimum-diameter portion with a minimum roll diameter, the minimum-diameter portion including an end edge corner portion for forming a winding end for the strip plastic film.

13. The conveyance guide for the strip plastic film according to claim 11, wherein each reduced-diameter portion includes a recess portion between each boundary corner portion and each end edge corner portion, the recess portion forming a non-contact region adapted to be not contacted by the strip plastic film.

14. The conveyance guide for the strip plastic film according to claim 9, wherein the guide roll includes sub-guides at opposite end portions in a width direction of a roll body of the guide roll, the sub-guides being adapted to allow the strip plastic film to slide on the sub-guides while being in contact with the strip plastic film, or adapted to rotate while being in contact with the strip plastic film.

15. The conveyance guide for the strip plastic film according to claim 14, wherein the sub-guide includes moving means that is movable in a direction in which the strip plastic film is pressed, or a direction away from the strip plastic film.
